# EUROPEAN PATENT APPLICATION

(11) **EP 2 957 437 A1**
(43) Date of publication of application: **23.12.2015**
(21) Application number: 14751771.8
(22) Date of filing: 10.02.2014
(51) Int. Cl.: B60C 11/16, B60C 11/04, B60C 11/12, B60C 11/13

(54) **PNEUMATIC TIRE**

(30) Priority: 12.02.2013 JP 2013024379
(71) Applicant: The Yokohama Rubber Co., Ltd., Minato-ku Tokyo 105-8685 (JP)
(72) Inventor: ENDO, Hiroki, Hiratsuka-shi Kanagawa 254-8601 (JP)
(74) Representative: Dilg, Haeusler, Schindelmann Patentanwaltsgesellschaft mbH
(86) International application number: PCT/JP2014/053054
(87) International publication number: WO 2014/126048

(57) **Abstract**

To provide a pneumatic tire with improved braking performance on ice and pin release resistance performance in a well-balanced manner. The number of inserted stud pins (24) in the shoulder region (TS) is from 1.5 to 2.5 times the number of inserted stud pins (24) in the center region (TC), and the protruding amount of the stud pins (24) in the shoulder region (TS) is from 1.2 to 2.0 times the protruding amount of the stud pins (24) in the center region (TC).

## Description

### TECHNICAL FIELD

The present invention relates to a pneumatic tire with stud pins embedded in the tread surface thereof.

### BACKGROUND

Conventionally, pneumatic tires are known with stud pins embedded in the tread surface thereof (for example, see Patent Document 1). Patent Document 1 discloses improvement in the braking performance on ice by controlling the number of holes for inserting stud pins, and therefore the number of inserted stud pins.

### PRIOR ART DOCUMENT

### Patent Document

Patent Document 1: Japanese Unexamined Patent Application Publication No. 2012-183954A

### SUMMARY OF THE INVENTION

### Problems to be Solved by the Invention

However, it is not clear that by just controlling the number of inserted stud pins the braking performance on ice and the pin release resistance performance are improved in a well-balanced manner.

In the light of the foregoing, it is an object of the present invention to provide a pneumatic tire with braking performance on ice and pin release resistance performance improved in a well-balanced manner.

### Means to Solve the Problem

The pneumatic tire according to the present invention to solve the above problem includes: land portions partitioned and formed by a plurality of inclined grooves inclined with respect to the tire circumferential direction; sipes provided in at least one of the land portions; and stud pins embedded in at least one of the land portions. Here, the region 50% of the tire ground contact width with the tire equatorial plane as center is referred to as the center region, and each of the regions on the outer side in the tire width direction of the center region to the ground contact edges are referred to as shoulder regions. Under the assumptions as described above, the number of the stud pins inserted into the shoulder regions is from 1.5 times to 2.5 times the number of stud pins inserted into the center region. The average protruding amount of the stud pins in the shoulder regions is from 1.2 times to 2.0 times the average protruding amount of the stud pins in the center region.

### EFFECT OF THE INVENTION

In the pneumatic tire according to the present invention, the number of inserted stud pins and the average protruding amount of the stud pins in the shoulder regions relative to the center region are within predetermined ranges. As a result, it is possible to improve the braking performance on ice and the pin release resistance performance in a well-balanced matter.

### BRIEF DESCRIPTION OF THE DRAWINGS

FIG. 1 is a planar development view illustrating an example of the tread portion of a pneumatic tire according to an embodiment of the present invention.
FIG. 2 is a cross-sectional view at the line A-A' in FIG. 1, illustrating one example of stud pins embedded in the pneumatic tire according to an embodiment of the present invention.

### BEST MODE FOR CARRYING OUT THE INVENTION

The following is a detailed description of an embodiment of a pneumatic tire according to the present invention (hereinafter, referred to as the Basic Mode and Additional Modes 1 to 3), based on the drawings. Note that the present invention is not limited to these embodiments. The constituents of the embodiment include constituents that can be easily replaced by those skilled in the art and constituents substantially same as the constituents of the embodiment. In addition, the various modes included in this embodiment can be combined as desired within the scope of obviousness by a person skilled in the art.

### [Basic Mode]

The following is a description of the Basic Mode of the pneumatic tire according to the present invention. In the following description, "tire radial direction" refers to a direction orthogonal to the rotational axis of the pneumatic tire; "inner side in the tire radial direction" refers to the side facing the rotational axis in the tire radial direction; and "outer side in tire radial direction" refers to the side distanced from the rotational axis in the tire radial direction. "Tire circumferential direction" refers to a circumferential direction with the rotational axis as a center axis. Additionally, "tire width direction" refers to the direction parallel to the rotational axis; "inner side in the tire width direction" refers to the side facing a tire equatorial plane CL in the tire width direction; and "outer side in the tire width direction" refers to the side distanced from the tire equatorial plane CL in the tire width direction. "Tire equatorial plane CL" refers to a plane that is orthogonal to the rotational axis of the pneumatic tire and that passes through a center of a tire width of the pneumatic tire.

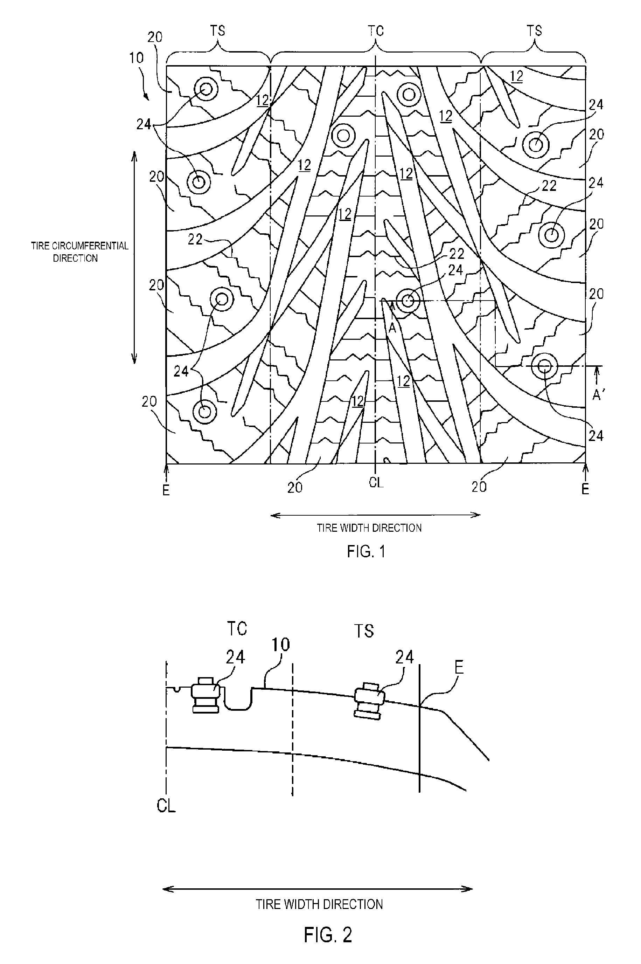

FIG. 1 is a planar development view illustrating an example of the tread portion of the pneumatic tire according to an embodiment of the present invention. The tread portion illustrated in this drawing is formed from a rubber material (tread rubber), is exposed on the outermost side in the tire radial direction of the pneumatic tire, and the surface thereof constitutes the profile of the pneumatic tire. The surface of the tread portion is formed as a tread surface 10, which is a surface that contacts the road surface when a vehicle (not illustrated in the drawings) upon which the pneumatic tire is mounted is traveling.

A plurality of inclined grooves 12 inclined with respect to both the tire circumferential direction and the tire width direction is provided on the tread surface 10. Various types can be adopted as the inclined grooves 12, for example, as illustrated in FIG. 1, the width of the groove may vary in the extension direction of the groove, and the grooves may branch into several grooves along the extension length.

Also, although not illustrated on FIG. 1, a plurality of circumferential grooves extending in the tire circumferential direction can optionally be included on the tread surface. Various types of circumferential groove can be adopted, for example, a groove that does not vary in the extension direction of the groove.

Likewise, although not illustrated on FIG. 1, a plurality of lateral grooves extending in the tire width direction may optionally be included on the tread surface 10. Various types of lateral grooves can be adopted, for example, a groove having a groove width that varies in the extension direction.

Note that, as a whole, the plurality of inclined grooves 12 can have a shape that extends in the tire circumferential direction intermediated by circumferential grooves that are not illustrated on FIG. 1, or they can have a zigzag shape extending in the tire circumferential direction without being intermediated by circumferential grooves. If the plurality of inclined grooves 12 as a whole has such a zigzag shape, and in particular, if the angle of each of the inclined grooves 12 with respect to the tire circumferential direction is small, this group of inclined grooves with a zigzag shape can be considered to be circumferential grooves continuous in the tire circumferential direction. Therefore, in the present embodiment, it is not envisaged that circumferential grooves continuous in the tire circumferential direction are positively excluded.

In addition, sipes 22 are provided in at least any one of the land portions of the tread surface 10, all the land portions 20 in the example illustrated in FIG. 1. The sipes 22 may extend in a linear manner in the tire width direction, or they may extend in the tire width direction with an amplitude in the tire circumferential direction, such as a zigzag shape, a sine wave shape, a triangular wave shape, a rectangular wave shape, or the like. Also, the sipes 22 may extend intermittently in the tire width direction within one of the land portions 20.

Therefore, inclined grooves 12 are formed on the tread surface 10 of the pneumatic tire according to the present embodiment, and circumferential grooves and lateral grooves can optionally be formed. Also, a predetermined tread pattern is formed on the tread surface 10 by forming sipes 22 in at least any one of the land portions 20 partitioned by these grooves.

Stud pins 24 are embedded in at least any one of the land portions 20 on the tread surface 10 having the tread pattern as described above in, for example, the positions illustrated in FIG. 1. The stud pins 24 are embedded at a constant pitch in the tire circumferential direction in predetermined positions in the tire width direction.

Under the assumptions as described above, in the present embodiment as illustrated in FIG. 1, the region 50% of the tire ground contact width with the tire equatorial plane CL as center is referred to as the center region TC, and each of the regions on the outer side in the tire width direction of the center region TC to the ground contact edges E is referred to as shoulder regions TS.

Also, in the present embodiment as illustrated in FIG. 1, the number of inserted stud pins 24 in the shoulder regions TS (shoulder number) is from 1.5 to 2.5 times the number of inserted stud pins 24 in the center region TC (center number).

When a constant number of stud pins 24 in a single tire is embedded protruding by the same amount from the tread surface, if more are embedded in the shoulder regions TS than the center region TC, a significant effect of improving the braking performance on ice is obtained due to the effect of scraping the ice. Therefore, as described above, by making the shoulder number greater than or equal to 1.5 times the center number, it is possible to sufficiently ensure the effect of scraping on ice in the shoulder regions TS, which can easily affect the braking performance on ice in particular, and efficiently improve the braking performance on ice for the tire as a whole.

Also, during rolling motion of the tire, the stud pins 24 are released more easily from the center region TC than the shoulder regions TS of the tire. Therefore, as described above, by making the shoulder number greater than or equal to 1.5 times the center number, the number of stud pins 24 in the center region TC, which can easily affect the pin release resistance performance, is reduced so the release of pins is suppressed, and it is possible to efficiently improve the pin release resistance performance of the tire as a whole.

In contrast, when a constant number of stud pins 24 in a single tire is embedded protruding by the same amount from the tread surface, and if an excessive number of the stud pins 24 is embedded in the shoulder regions TS relative to the center region TS, sufficient braking performance on ice due to the effect of scraping the ice cannot be obtained, as the number of stud pins 24 in the center region TC is reduced. Therefore, as described above, by making the shoulder number less than or equal to 2.5 times the center number, it is possible to sufficiently obtain the effect of scraping on the ice in the center region TC, while obtaining the effect of scraping on ice in the shoulder regions TS, and it is possible to efficiently improve the braking performance on ice for the tire as a whole.

Next, in the tread surface of the present embodiment, the average protruding amount of the stud pins 24 in the shoulder regions TS (shoulder average protruding amount) is from 1.2 times to 2.0 times the average protruding amount of the stud pins 24 in the center region TC (center average protruding amount). Here, the protruding amount of the stud pins 24 is measured from the tread surface when a hole is not formed for embedding the stud pin 24 at the position where the stud pin is embedded and is referred to as the maximum dimension in the tire radial direction of the stud pin. Also, the average protruding amount is the average value of the protruding amount of the stud pins 24 in the respective regions (center region TC and shoulder regions TS).

FIG. 2 is a cross-sectional view at the line A-A' in FIG. 1, illustrating an example of stud pins embedded in the pneumatic tire according to an embodiment of the present invention. In the example illustrated in FIG. 2, the ratio of the average protruding amount of the stud pins 24 formed in the shoulder regions TS and the average protruding amount of the stud pins 24 formed in the center region TC (shoulder region TS / center region TC) is in the range from 1.2 to 2.0.

If the stud pins 24 are embedded in both the center region TC and the shoulder regions TS with the same average protruding amount, and, if the other conditions are the same (for example, the numbers of inserted pins), then a significant effect of improving the braking performance on ice due to the effect of scraping the ice is obtained in the shoulder regions TS than in the center region TS. Also, the greater the average protruding amount, the deeper the stud pins 24 bite into the ice, and the greater the scraping effect. Therefore, as described above, by making the average protruding amount of the shoulders greater than or equal to 1.2 times the average protruding amount of the center, it is possible to ensure sufficient scraping effect on the ice in the shoulder regions TS, which easily affects the braking performance on ice, and efficiently improves the braking performance on ice for the tire as a whole.

Also, during rolling motion of the tire, the stud pins 24 are released more easily from the center region TC than the shoulder regions TS of the tire. Therefore, as described above, by making the shoulder average protruding amount greater than or equal to 1.2 times the center average protruding amount, the average protruding amount of the stud pins in the center region TC, which easily affects the pin release resistance performance in particular, is reduced, so release of pins is suppressed, and it is possible to efficiently improve the pin release resistance performance for the tire as a whole.

In contrast, if the average protruding amount of the stud pins 24 in the shoulder regions TS is increased excessively compared with the center region TC, the stud pins 24 will be easily released in the shoulder regions TS, and the pin release resistance performance will not be improved. Also, if the stud pins 24 are released in the shoulder regions TS, there will be no improvement in the braking performance on ice due to a reduction in the effect of scraping the ice in the shoulder regions TS. Therefore, as described above, by making the shoulder average protruding amount less than or equal to 2.0 times the center average protruding amount, it is possible to efficiently improve the pin release resistance performance and braking performance on ice for the tire as a whole.

As described above, in the pneumatic tire according to the present embodiment, the number of inserted pins and the average protruding amount of the stud pins are predetermined in relation to the center region and the shoulder regions. In this way, it is possible to efficiently and in a well-balanced manner improve the braking performance on ice due to the effect of scraping the ice and the pin release resistance performance for the tire as a whole.

Although not illustrated on the drawings, the pneumatic tire according to the present embodiment as described above has a meridian cross-section form the same as a conventional pneumatic tire. Here, the meridian cross-section form of the pneumatic tire refers to the cross-sectional shape of the pneumatic tire as it appears on a plane normal to the tire equatorial plane CL. In the pneumatic tire according to the present embodiment, the pneumatic tire according to the present embodiment includes a bead portion, a side wall portion, and a tread portion from the inner side toward the outer side in the tire radial direction in a tire meridian cross-sectional view. Also, in the tire meridian cross-section view, for example, the pneumatic tire includes a carcass layer extending from the tread portion to the bead portions on both sides and wound around a pair of bead cores, and a belt layer and a belt reinforcing layer provided in that order on the carcass layer on the outer side in the tire radial direction.

Also, the pneumatic tire according to the present embodiment is obtained after carrying out the various normal manufacturing processes, in other words, a step of mixing the tire materials, a step of processing the tire materials, a step of molding the green tire, a vulcanization step, an inspection step after vulcanization, and the like. When manufacturing the pneumatic tire according to the present embodiment, in particular, the vulcanization is carried out using a mold to enable the predetermined tread pattern illustrated in FIG. 1 to be formed, and after the inspection step, the stud pins are embedded in predetermined locations on the land portions.

### [Additional Modes]

Next, Additional Modes 1 to 3 are described that can optionally be implemented on the Basic Mode of the pneumatic tire according to the present invention as described above.

### (Additional Mode 1)

In the Basic Mode, preferably, the disposal density of the sipes 22 in the shoulder region TS (shoulder disposal density) is from 0.4 to 0.8 times the disposal density of the sipes 22 in the center region TC (center disposal density) (Additional Mode 1). Here, the disposal density of the sipes 22 refers to the total length of the sipes 22 per unit area of the land portions 20 in each of the regions (center region TC and shoulder regions TC). The length of the sipes in the case that the sipes are not straight but, for example, a zigzag shape, is the length that would be measured if the zigzag sipe was extended to a straight line.

By making the shoulder disposal density less than or equal to 0.8 times the center disposal density, the sipe disposal density is securely reduced in the shoulder regions TS compared with the center region TC. In this way, the block rigidity is increased in the shoulder regions TS where more stud pins 24 are disposed than in the center region TC, and in particular, it is possible to improve the pin release resistance performance in the shoulder regions TS.

In contrast, if the sipe disposal density is less than that necessary in the shoulder regions TS as a result of excessively reducing the sipe disposal density in the shoulder regions TS compared with the center region TC, it will not be possible to obtain sufficient edge effect from the sipes in the shoulder regions TS. Therefore, by making the shoulder disposal density greater than or equal to 0.4 times the center disposal density, in particular, it is possible to ensure the edge effect due to the sipes in the shoulder regions TS, and improve the braking performance on ice.

### (Additional Mode 2)

In the Basic Mode and a mode that combines the Additional Mode 1 with the Basic Mode, preferably, the average depth of the inclined grooves 12 in the shoulder regions TS (shoulder average depth) is smaller than the average depth of the inclined grooves 12 in the center region TC (center average depth) by from 1 mm to 3 mm (Additional Mode 2). Here, the depth of the inclined grooves 12 refers to the maximum dimension of the inclined grooves measured in the tire radial direction from the tread surface 10 assuming the inclined grooves are not present. Also, the average depth is the average value of the depth of the inclined grooves 12 in each of the regions (center region TC and shoulder regions TS).

By making the shoulder average depth smaller than the center average depth by at least 1 mm, the block rigidity is increased in the shoulder regions TS where more stud pins 24 are disposed than in the center region TC, so it is possible to improve the pin release resistance performance in the shoulder regions TS in particular.

In contrast, if the shoulder average depth is excessively reduced compared with the center average depth, not only will the water drainage performance be reduced in the shoulder regions TS, but also in the shoulder regions TS, the force shearing snow columns formed by packing snow into the grooves provided in the tread surface 10 (snow column shear force) is reduced, so the braking and driving performance on snow is reduced. Therefore, by making the difference between the shoulder average depth and the center average depth less than or equal to 3 mm, it is possible to ensure the water drainage performance by sufficient groove depth in the shoulder regions TS, and ensure the braking and driving performance on snow without reducing the shear force on snow.

### (Additional Mode 3)

In the Basic Mode and a mode that combines at least any one of the Additional Modes 1 and 2 with the Basic Mode, preferably, on the tread developed surface under no load conditions when an air pressure ranging from -5% to +5% of the regular inner pressure is applied, the groove area in the shoulder regions TS (shoulder groove area) is from 0.4 to 0.8 times the groove area in the center region TC (center groove area) (Additional Mode 3). "Regular inner pressure" refers to the "maximum air pressure" defined by JATMA, the maximum value in "tire load limits at various cold inflation pressures" defined by TRA, and the "inflation pressures" defined by ETRTO. Also, the tread developed surface refers to the plane of the tread portion as illustrated in FIG. 1. In addition, the groove area refers to the area partitioned by the grooves represented on the tread developed surface.

Under no load conditions when the above predetermined inner pressure is applied, by making the shoulder groove area less than or equal to 0.8 times the center groove area, the block rigidity is increased in the shoulder regions TS where more stud pins 24 are disposed than in the center region TC, and in particular, it is possible to improve the pin release resistance performance in the shoulder regions TS.

In contrast, when the shoulder groove area is excessively reduced relative to the center groove area, not only is the water drainage performance in the shoulder regions TS reduced, but also the snow column shear force is reduced in the shoulder regions TS, so the braking and driving performance on snow is reduced. Therefore, by making the shoulder groove area greater than or equal to 0.4 times the center groove area, in particular, it is possible to ensure the water drainage performance by sufficient groove area in the shoulder regions TS, and ensure the braking and driving performance on snow without reducing the shear force on snow.

### EXAM PLES

Pneumatic tires according to a Conventional Example and Working Example 1 to Working Example 5 were produced in accordance with the various conditions shown in Table 1 (number of inserted stud pins in the shoulder regions TS (shoulder pin number), number of inserted stud pins in the center region TC (center pin number), number of inserted stud pins in the shoulder regions TS relative to the number in the center region TC (pin number ratio Sh/Ce), average protruding amount of the stud pins in the shoulder regions TS relative to that in the center region TC (average protruding amount ratio Sh/Ce), disposal density of sipes in the shoulder regions TS relative to that in the center region TC (sipe disposal density ratio Sh/Ce), average depth of the inclined grooves in the shoulder regions TS relative to that of the center region TC (average depth difference Sh-Ce), and groove area in the shoulder region TS relative to that in the center region TC (groove area ratio Sh/Ce)).

The tires according to the Conventional Example and Working Example 1 to Working Example 5 (the tests tires) had a tire size of 195/65R15, and all the test tires were evaluated for braking performance on ice and pin release resistance performance. Results of these tests are shown in Table 1.

### Braking performance on ice:

Each test tire was assembled on a 15 x 6J rim with an air pressure of 230 kPa, mounted on a sedan vehicle with an engine displacement of 2000 cc, and the distance required for the vehicle to come to a stop from a speed of 30 km/h on an icy surface was measured. Then, based on the measurement results, index evaluation was performed taking a Conventional Example as a reference (100). For the evaluation, the larger the index, the higher the braking performance on ice.

### Pin release resistance performance

Each test tire was assembled on a 15 x 6J rim with an air pressure of 230 kPa, mounted on a sedan vehicle with an engine displacement of 2000 cc, and after driving 10,000 km on normal roads within Russia where there are no restrictions on stud tires, the number of stud pins released was determined. Then, based on the determined results, index evaluation was performed taking a Conventional Example as a reference (100). For the evaluation, the larger the index, the higher the pin release resistance performance.

**[Table 1]**

| | Conventional Example | Working Example 1 | Working Example 2 | Working Example 3 | Working Example 4 | Working Example 5 |
|---|---|---|---|---|---|---|
| Shoulder pin number (No.) | 65 | 90 | 90 | 90 | 90 | 90 |
| Center pin number (No.) | 65 | 40 | 40 | 40 | 40 | 40 |
| (Pin number ratio Sh/Ce) | 1 | 2.25 | 2.25 | 2.25 | 2.25 | 2.25 |
| (Average protrusion amount ratio Sh/Ce) | 1 | 1.5 | 1.5 | 1.5 | 1.5 | 1.5 |
| Sipe disposal density ratio Sh/Ce | 1 | 0.3 | 0.5 | 0.5 | 0.5 | 0.5 |
| Average depth difference Sh-Ce (mm) | 0 | +2 | -2 | +2 | -2 | -2 |
| Groove area ratio Sh/Ce | 1 | 1 | 1 | 1 | 0.5 | 2 |
| Braking performance on ice | 100 | 102 | 106 | 104 | 106 | 104 |
| Pin release resistance performance | 100 | 106 | 112 | 104 | 116 | 108 |

According to Table 1, it can be seen that with the pneumatic tires according to Working Example 1 to Working Example 5 that comply with the technical scope of the present invention (pin number ratio Sh/Ce and average protruding amount ratio Sh/Ce are within predetermined ranges), the braking performance on ice and the pin release resistance performance are improved in a well-balanced manner compared with the pneumatic tire according to the Conventional Example, which does not comply with the technical scope of the present invention.

The present invention includes the following aspects.
(1) A pneumatic tire, comprising: land portions partitioned and formed by a plurality of inclined grooves inclined with respect to the tire circumferential direction; sipes provided in at least one of the land portions; and stud pins embedded in at least one of the land portions, wherein when a region 50% of the tire ground contact width with a tire equatorial plane as center is referred to as the center region, and each of the regions on the outer side in the tire width direction of the center region to the ground contact edges is referred to as shoulder regions, the number of the stud pins inserted into the shoulder regions is from 1.5 times to 2.5 times the number of stud pins inserted into the center region, and the average protruding amount of the stud pins in the shoulder regions is from 1.2 times to 2.0 times the average protruding amount of the stud pins in the center region.
(2) The pneumatic tire according to (1) above, wherein the disposal density of the sipes in the shoulder regions is from 0.4 times to 0.8 times the disposal density of the sipes in the center region.
(3) The pneumatic tire according to (1) or (2) above, wherein the average depth of the inclined grooves in the shoulder regions is from 1 mm to 3 mm smaller than the average depth of the inclined grooves in the center region.
(4) The pneumatic tire according to any one of (1) to (3) above, wherein on a tread developed surface under no load conditions with an inner pressure from -5% to +5% of the regular inner pressure, the groove area in the shoulder region is from 0.4 times to 0.8 times the groove area in the center region.

### REFERENCE NUMBER

10 Tread surface
12 Inclined groove
20 Land portion
22 Sipes
24 Stud pin
CL Tire equatorial plane
E Ground contact edge
TC Center region
TS Shoulder region

## Claims

1. A pneumatic tire, comprising:
land portions partitioned and formed by a plurality of inclined grooves inclined with respect to a tire circumferential direction;
sipes provided in at least one of the land portions; and
stud pins embedded in at least one of the land portions,
when a region 50% of a tire ground contact width with a tire equatorial plane as center is referred to as a center region, and each of the regions on the outer side in a tire width direction of the center region to ground contact edges is referred to as a shoulder region,
the number of the stud pins inserted into the shoulder regions being from 1.5 times to 2.5 times the number of stud pins inserted into the center region, and the average protruding amount of the stud pins in the shoulder regions being from 1.2 times to 2.0 times the average protruding amount of the stud pins in the center region.

2. The pneumatic tire according to claim 1, wherein
a disposal density of the sipes in the shoulder regions is from 0.4 times to 0.8 times the disposal density of the sipes in the center region.

3. The pneumatic tire according to claim 1 or 2, wherein
an average depth of the inclined grooves in the shoulder regions is from 1 mm to 3 mm smaller than the average depth of the inclined grooves in the center region.

4. The pneumatic tire according to any one of claims 1 to 3, wherein
on a tread developed surface under no load conditions with an inner pressure from -5% to +5% of a regular inner pressure, a groove area in the shoulder region is from 0.4 times to 0.8 times the groove area in the center region.
